# EUROPÄISCHE PATENTSCHRIFT

(11) **EP 3 776 608 B1**
(45) Veröffentlichungstag und Bekanntmachung des Hinweises auf die Patenterteilung: **06.09.2023**
(21) Anmeldenummer: 19719194.3
(22) Anmeldetag: 11.04.2019
(51) Int. Cl.: H01F 27/32, H01F 41/12, B22D 19/00, B22D 19/08, H01F 41/04, B22C 9/04

(54) **VERFAHREN ZUR HERSTELLUNG EINES GEWENDELTEN ELEKTRISCH LEITENDEN KÖRPERS**
METHOD FOR PRODUCING A COILED ELECTRICALLY CONDUCTIVE BODY
PROCÉDÉ DE FABRICATION D'UN CORPS ÉLECTROCONDUCTEUR SPIRALÉ

(30) Priorität: 12.04.2018 DE 102018205587
(43) Veröffentlichungstag der Anmeldung: 17.02.2021
(73) Patentinhaber: Fraunhofer-Gesellschaft zur Förderung der angewandten Forschung e.V., 80686 München (DE)
(72) Erfinder: BUSSE, Matthias, 28359 Bremen (DE); WÖSTMANN, Franz-Josef, 28359 Bremen (DE)
(74) Vertreter: Pfenning, Meinig & Partner mbB
(86) Internationale Anmeldenummer: PCT/EP2019/059351
(87) Internationale Veröffentlichungsnummer: WO 2019/197581

(56) Entgegenhaltungen:
- EP-A2- 2 387 135
- DE-A1-102014 106 851
- DE-C1- 4 203 904
- JP-A- H07 163 100
- GRONINGER M ET AL: "Casting production of coils for electrical machines", ELECTRIC DRIVES PRODUCTION CONFERENCE (EDPC), 2011 1ST INTERNATIONAL, IEEE, 28. September 2011 (2011-09-28), Seiten 159-161, XP032000385, DOI: 10.1109/EDPC.2011.6085534 ISBN: 978-1-4577-1371-2

## Beschreibung

Die Erfindung liegt auf dem Gebiet des Maschinenbaus und der Elektrotechnik und ist mit Vorteil bei elektrischen Maschinen anwendbar. Eine Anwendung ist jedoch generell bei allen Einsatzfällen von elektrischen Spulen denkbar.

Konkreter bezieht sich die Erfindung auf ein Verfahren zur Herstellung eines gewendelten elektrisch leitenden Körpers.

In elektrischen Maschinen werden gewendelte elektrisch leitende Körper als Spulen zur Erzeugung von Magnetfeldern oder zu anderen elektrischen Zwecken eingesetzt. Elektrische Spulen können generell in elektrischen Anlagen verwendet werden. Eine wichtige Größe zur Qualifizierung derartiger Spulen für bestimmte Zwecke ist die gute Raumausnutzung. Üblicherweise haben verschiedene Windungen einer Spule einen Abstand voneinander, um die elektrische Kontaktierung benachbarter Wendelgänge zu verhindern. Dazu ist aus Fertigungsgründen üblicherweise ein bestimmter Mindestabstand zwischen benachbarten Wendelgängen notwendig, so dass die Raumausnutzung begrenzt bleibt. In vielen Fällen werden solche gewendelten elektrisch leitenden Körper auch an ihrer Außenseite elektrisch isoliert, um eine elektrische Kontaktierung zu vermeiden.

Spulen mit einer guten Raumausnutzung werden bisher beispielsweise als gegossene oder durch Umformung hergestellte Spulen, beispielsweise Aluminiumspulen oder Kupferspulen, hergestellt. Die Herstellung solcher Spulen ist jedoch aufwendig. Auch das Aufbringen einer Isolierung auf eine derartige Spule erfordert aufwendige Arbeitsschritte, insbesondere dann, wenn der Abstand benachbarter Wendelgänge/Windungen gering ist. Aus der Veröffentlichung Groninger et al: "Casting production of coils for electrical machines", Electric Drives Production Conference (EDPC), 2011 1st international, IEEE, 28.September 2011, S. 159-161 ist bereits ein Verfahren zur Herstellung eines gewendelten, elektrisch leitenden Körpers unter Verwendung einer verlorenen Form bekannt, wobei auf den Körper eine elektrisch isolierende Schicht aufgebracht wird.

Aus der EP2387135A2 geht die Herstellung einer elektrotechnischen Spule aus einem Metallguss und das Aufbringen einer elektrisch isolierenden Schicht nach der Herstellung der Spule hervor.

Der Erfindung liegt vor dem Hintergrund des Standes der Technik die Aufgabe zugrunde, ein Verfahren zur Herstellung eines gewendelten elektrisch leitenden Körpers zu schaffen, durch das solche Körper mit einer guten Raumausnutzung mit einem möglichst geringen Aufwand geschaffen werden. Unter einer guten Raumausnutzung ein möglichst hoher Füllungsgrad des Gesamtvolumens durch das Volumen der Wendel verstanden, so dass möglichst wenig Volumen zwischen den einzelnen Gängen der Wendel oder Wicklung verlorengeht.

Die Aufgabe wird mit den Merkmalen der Erfindung durch ein Verfahren gemäß den Patentansprüchen gelöst.

Somit bezieht sich die Erfindung unter anderem auf ein Verfahren zur Herstellung eines gewendelten, elektrisch leitenden Körpers, bei dem zunächst ein gewendeltes Modell als verlorene Form aus einem unter Wärmeeinwirkung verflüssigbaren oder verdampfbaren Modellmaterial hergestellt und danach mit einer (vorzugsweise elektrisch) isolierenden Schicht bedeckt und in einen Formsand eingebettet wird und wobei danach in die verlorene Form unter Verdrängung des Modellmaterials ein metallisches Gussmaterial eingefüllt wird und sich mit der isolierenden Schicht verbindet und wobei der gegossene Körper mit der auf diesem haftenden isolierenden Schicht dem Formsand entnommen wird.

Bei dem genannten Verfahren wird der gewendelte, elektrische leitende Körper in einem Metallgussverfahren mit verlorener Form hergestellt. Die verlorene Form wird zunächst als Modell in der für das Endprodukt gewünschten Gestalt, also in Wendelform, hergestellt, danach mit einer (vorzugsweise elektrisch) isolierenden Schicht bedeckt, die später die Leiterisolierung der Spule bzw. die Außenisolierung des elektrisch leitenden Körpers bildet und beim Ausgießen der verlorenen Form an dem Metallgusskörper haftet. Das Gussmaterial und das Material der (vorzugsweise elektrisch) isolierenden Schicht sind derart aufeinander abgestimmt, dass die (vorzugsweise elektrisch) isolierende Schicht an dem Gussteil gut haftet. Die (vorzugsweise elektrisch) isolierende Schicht erhält eine Zusammensetzung, die sie zur späteren Verwendung als Isolierschicht der Spule qualifiziert.

Das derart beschichtete Modell wird in einen Formsand eingebettet, wobei unter Formsand jedes verformbare Material verstanden wird, das sich für den Guss in verlorener Form zum Einbetten des Modells eignet, also insbesondere Materialien in Form von Granulaten und sonstigen feinkörnigen Schüttgütern.

Nach dem Gießen des Metallkörpers wird dieser mit der aufgebrachten isolierenden Schicht dem Formsand entnommen und bestenfalls minimal gereinigt, wobei jedoch die Isolierschicht an dem elektrisch leitenden Körper haften bleibt. Die Isolierschicht kann außer der Isolation des Körpers auch als Trennschicht zum Formsand wirken. Hierzu besteht die Isolierschicht vorzugsweise aus einem Material, das eine gute Trennbarkeit des Formsands bewirkt.

In einer besonderen Ausgestaltung des Verfahrens kann vorgesehen sein, dass die isolierende Schicht in Form einer Schlichte auf das gewendelte Modell aufgetragen wird.

Dabei kann vorgesehen sein, dass die Schlichte eine Trägerflüssigkeit enthält, einen Feuerfestbestandteil, ein Bindemittel und optional einen weiteren Zuschlagsstoff.

Die Viskosität der Schlichte wird vorteilhaft so eingestellt, dass eine passende Schichtdicke auf das Modell aufgetragen werden kann. Die Schicht wird dann zunächst durch Trocknen, Abbinden oder Härten verfestigt und weist zu diesem Zweck entsprechend strukturierte Bindemittel und/oder Zuschlagsstoffe auf. Im verfestigten Zustand weist die Schlichte eine Festigkeit auf, die ein Eingießen des metallischen Gießmaterials ohne Beschädigung der Schicht erlaubt, derart, dass sich das Gussmaterial mit der Schicht verbindet. Nach dem Erstarren des Gussmaterials bildet die Schicht dann eine Oberflächenbeschichtung, die fest auf dem Gusskörper haftet.

Eine weitere Implementierung des Verfahrens kann vorsehen, dass die isolierende Schicht durch Tauchen, Spritzen oder Sprühen auf das gewendelte Modell aufgetragen wird.

Dabei kann beispielsweise auch vorgesehen sein, dass die (vorzugsweise elektrisch) isolierende Schicht in Form mehrerer nacheinander aufgebrachter Teilschichten aufgebracht wird.

Die verschiedenen Schichten können aufeinander aufbauend aufgetragen und jeweils vor dem Auftragen der nächsten Schicht wenigstens teilweise verfestigt werden. Es können jedoch auch mehrere Schichten gemeinsam nach dem Auftragen der letzten Schicht verfestigt werden.

Dabei kann beispielsweise vorgesehen sein, dass die isolierende Schicht durch Erwärmen und/oder einen Luftstrom teilschichtweise oder nach Aufbringen der letzten Schicht getrocknet wird. Dabei kann die Erwärmung beispielsweise auch durch Infrarotbestrahlung bewirkt werden.

Das gewendelte Modell kann ganz oder in Teilen gegossen oder geschäumt und gegebenenfalls aus Teilen zusammengefügt werden. Es kann auch aus einem extrudierten Strang durch Verformung erzeugt werden.

Zur Herstellung des gewendelten Modells kann auch vorgesehen sein, dass dieses als Rohling hergestellt und danach durch Erzeugen einer wendelförmigen Ausnehmung in die Form einer Wendel gebracht wird. Dazu kann beispielsweise vorgesehen sein, dass in dem Rohling die wendelförmige Ausnehmung durch ein um eine den Rohling durchsetzende erste Achse rotierendes und gleichzeitig entlang der ersten Achse stetig vorgeschobenes Werkzeug erzeugt wird. Die erste Achse kann dabei innerhalb einer Ausnehmung des Kerns angeordnet sein, die diesen in Richtung der ersten Achse vollständig durchsetzt. Beispielsweise kann der Kern als Hohlzylinder ausgebildet sein. Er kann jedoch auch als Quader mit einer durchgehenden zylindrischen Ausnehmung gestaltet sein.

Um eine abrasive oder spanende Wirkung des Werkzeugs zu erreichen, kann vorgesehen sein, dass dieses strangförmig, insbesondere stabförmig, ausgebildet ist und während der Erzeugung der wendelförmigen Ausnehmung um eine zweite Achse, insbesondere seine eigene Längsachse, rotiert oder entlang der zweiten Achse eine oszillierende Bewegung ausführt, wobei das Werkzeug insbesondere eine säge-oder raspelartige Zahnung aufweist. Damit kann das Werkzeug durch den gesamten Rohling wendelförmig hindurchbewegt werden und in diesen eine wendelförmige Ausnehmung einbringen. Der übrige, stehenbleibende Teil des Rohlings weist dann ebenso die Form einer Wendel auf und bildet das Modell für den nachfolgenden Metallguss in verlorener Form.

Anstelle oder zusätzlich zu der abrasiven Wirkung des Werkzeugs kann vorgesehen sein, dass das Werkzeug auf eine Temperatur beheizt wird, bei der das Material des Modells zumindest erweicht, insbesondere schmilzt. Das Werkzeug wirkt dann als Heißschneidedraht und kann ebenso wie ein raspelartiges Werkzeug eine wendelartige Ausnehmung in dem Rohling/Kern erzeugen.

Das erfindungsgemäße Verfahren eignet sich sowohl zur Beschichtung mit elektrisch isolierenden Schichten als auch mit nicht zwingend elektrisch isolierenden Schichten, d. h. Schichten, die beispielsweise zur Korrosionsvermeidung/ Korrosionsverringerung oder zu anderen isolierenden Zwecken angebracht sind.

Prinzipiell kann bei der Wahl der Beschichtungsstoffe auf ähnliche Beschichtungsstoffe zurückgegriffen werden, wie sie in nachgängigen Beschichtungsverfahren verwendet werden. Für die beanspruchten Gegenstände haben sich jedoch auch die im Weiteren angegebenen Details als vorteilhaft herausgestellt: So kann das Material der isolierenden Schicht beispielsweise ein Kunststoffmaterial aufweisen (auch mit entsprechenden elektrisch isolierenden oder elektrisch nicht isolierenden Zuschlagstoffen versehen). Je nach Anwendung kommen auch keramische Materialien für die isolierende Beschichtung zum Einsatz.

Konkrete Beispiele für Materialien der isolierenden Schicht sind: thermoplastische Polyurethane, thermoplastische Polycarbonate und/oder Polymethylmethacrylat.

Es hat sich auch gezeigt, dass auf Materialien der klassischen Pulverbeschichtung und/oder Pulverlackierung zurückgegriffen werden kann, die ja auch in flüssiger Lösung verarbeitbar sein können.

Es hat sich gezeigt, dass als Materialien somit auch Polyamid, Polyvinylchlorid, Epoxidsysteme mit Polyester als Bindemittel, Polyestersysteme mit TGIC als Härter und/oder Acrylat- und/oder Polyurethansysteme enthalten sein können.

Das erfindungsgemäße Verfahren bietet sich insbesondere auch für die Herstellung von wendelförmigen Körpern bzw. Helices bzw. spiralförmigen Körpern, insbesondere auch zur Verwendung in elektrischen Maschinen und dort im großindustriellen Einsatz, an. Bei diesen ist ja das Merkmal gegeben, dass ein metallisches Grundmaterial sowie eine darauf haftende isolierende Schicht vorliegt.

Als Gussmaterial bieten sich beispielsweise Kupfer und Aluminium an.

Je nach Anwendung des wendelförmigen Körpers, beispielsweise in einer später zu montierenden elektrischen Maschine, können Geometrie und Größe des wendelförmigen Körpers unterschiedlich sein. Es ist nicht zwingend, dass es sich immer um spiralförmige Helices mit gleichmäßigem Windungsquerschnitt sowie einer gleichförmigen zylindrischen Innen- und Außenkontur handelt; beispielsweise sind sowohl Änderungen der Querschnittsfläche, der Querschnittsform und/oder des Gesamtkörpers als auch Änderungen der einzelnen Windung über deren Verlauf hinweg möglich. So ist es beispielsweise möglich, dass der Körper eine Längsachse (Achse in Richtung der größten Ausdehnung des Körpers) aufweist und die größte Ausdehnung des Körpers senkrecht zu dieser Längsachse zwischen 0,02 m und 2 m beträgt. Etwa kann die größte Ausdehnung senkrecht zu dieser Längsachse eines im Feinguss hergestellten Körpers beispielsweise zwischen 0,02 m und 1 m betragen, bei einem im Lost-Foam-Verfahren hergestellten Körper beispielsweise zwischen 0,2 m und 2 m.

Der Körper kann auch Windungen enthalten, wobei die größte Querschnittsausdehnung senkrecht zum Verlauf einer Windung zwischen 0,2 mm und 5 cm beträgt, vorzugsweise zwischen 0,7 mm und 2 cm. Etwa kann die größte Ausdehnung senkrecht zum Verlauf einer Windung eines im Feinguss hergestellten Körpers beispielsweise zwischen 0,2 mm und 1 cm betragen, bei einem im Lost-Foam-Verfahren hergestellten Körper beispielsweise zwischen 3 mm und 5 cm.

Es bieten sich beispielsweise mit dem Verfahren hergestellte Körper an, die als metallisches Material Kupfer, Aluminium, Silber oder Magnesium aufweisen und eine isolierende Schicht aus Kunststoff oder einem keramischen isolierenden Material aufweisen und beispielsweise eine kreisförmige oder elliptische oder mehreckige oder abgerundete mehreckige Form haben.

Weiterhin können mit dem Verfahren hergestellte Körper als metallisches Material auch andere Metalle oder auch Metalllegierungen oder statt des metallischen Materials auch andere elektrisch leitfähige Werkstoffe aufweisen. Damit können die Gießeigenschaften und mechanischen Eigenschaften an die technischen Anforderungen angepasst und es kann den wirtschaftlichen Anforderungen Rechnung getragen werden.

Im Folgenden wird die Erfindung anhand von Figuren eines Ausführungsbeispiels gezeigt und nachfolgend erläutert. Dabei zeigt
- Fig. 1: in einer perspektivischen Ansicht eine Rechteckspule,
- Fig. 2: in perspektivischer Ansicht einen Strangabschnitt eines gewendelten Modells,
- Fig. 3: ein Modell wie in Figur 2, zusätzlich mit einer ersten Beschichtung,
- Fig. 4: ein Modell mit einer aus zwei Schichten bestehenden Beschichtung,
- Fig. 5: die Beschichtung eines Modells nach dessen Entfernung,
- Fig. 6: einen metallischen Gusskörper mit einer Beschichtung,
- Fig. 7: schematisch ein Modell in perspektivischer Ansicht sowie eine Vorrichtung zur Herstellung des Modells und
- Fig. 8: schematisch die Darstellung eines Verfahrensablaufs zur Herstellung eines gewendelten, elektrisch leitenden Körpers.

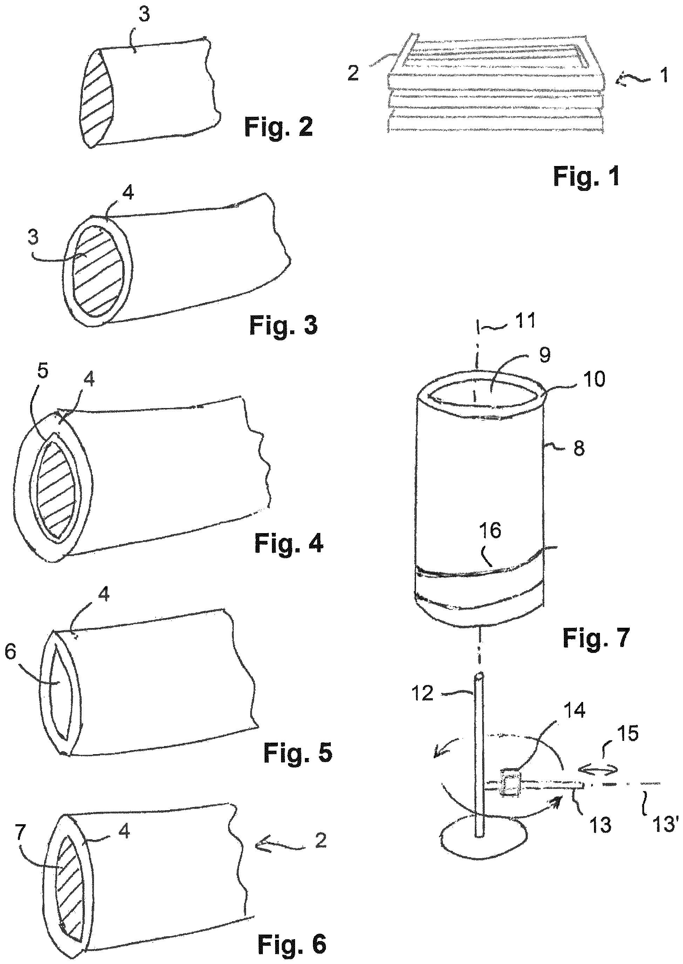

Figur 1 zeigt in perspektivischer Ansicht einen gewendelten elektrisch leitenden Körper in Form einer rechteckigen Spule 1, die aus einem gewendelten, im Querschnitt rechteckigen, strangförmigen Körper 2 besteht oder einen solchen strangförmigen Körper enthält. Alternativ dazu können gewendelte Körper beispielsweise als schraubenartig in Kreisform gewendelte Spulen oder auch als spiralartig gewundene Spulen oder in anderen ähnlichen Formen hergestellt sein. Ein solcher Körper kann durch Metallguss in einer verlorenen Form hergestellt werden.

Figur 2 zeigt einen kurzen Abschnitt eines strangförmigen Modells 3, das als im Querschnitt kreisförmiger gewendelter Körper ausgestaltet sein kann. Ein solches Modell kann beispielsweise als geschäumter Kunststoffkörper oder auch in Form eines Wachses hergestellt sein. Ein derartiges Modell oder ein Modellkörper wird als verlorene Form eingesetzt, das heißt, es wird in einen Kasten mit Formsand eingelegt, wobei eine Metallschmelze in das Volumen des Modellkörpers eingegossen wird und dabei das Material des Modellkörpers durch Verflüssigen oder Verdampfen auflöst und verdrängt.

Es ist üblich, derartige Modelle/Modellkörper mit einer Beschichtung zu versehen, um die gegebenenfalls raue oder poröse Oberfläche des Modells abzudichten und eine spätere Entformung des Gusskörpers aus dem Formsand sowie die Entfernung des auf dem Gusskörper festgesetzten Formsands zu erleichtern.

Figur 3 zeigt in perspektivischer Ansicht das strangförmige Modell aus Figur 2 mit einer dieser umgebenden, die Mantelfläche des Modells bedeckenden ersten Schicht 4, die aus einem elektrisch isolierenden und/oder einem korrosionsschützend isolierenden Material besteht.

Das Modell 3 wird zur Vorbereitung des Gusses mit der Schicht 4 in Formsand eingebettet, und die so beschaffene verlorene Form wird mit der Metallschmelze ausgegossen. Dabei bleibt die Schicht 4, die wesentlich temperaturresistenter ist als das Material des Modells 3, auf der Oberfläche des Gusskörpers haften.

Aus dem Stand der Technik sind Beschichtungen zur besseren Trennung des Gusskörpers vom Formsand bekannt, die nach dem Gussvorgang vom Gusskörper entfernt werden. Im Gegensatz dazu ist die hier beschriebene Schicht 4 sehr stabil und derart ausgestaltet, dass sie an dem Gusskörper gut haftet. Sie braucht nach der Entnahme des Gusskörpers aus dem Formsand von dem Gusskörper nicht entfernt zu werden und kann vielmehr als Isolierschicht auf dem Gusskörper verbleiben. Damit entfällt die Notwendigkeit, den Gusskörper später mit einer elektrisch isolierenden Schicht zu versehen.

Figur 4 stellt eine Variante dar, bei der der Modellkörper 3 zunächst mit einer Haftvermittlerschicht 5 versehen und erst darauffolgend mit einer Schicht 4 aus einem isolierenden Material beschichtet wird. Der Haftvermittler 5 besteht aus einem Material, das einerseits auf dem Gusskörper und andererseits an der isolierenden Schicht 4 gut haftet. Der Haftvermittler 5 ist dabei so ausgestaltet, dass er beim Eingießen einer Metallschmelze nicht zerstört wird, sondern an dem Metallgusskörper haftet. Der Haftvermittler kann aus einem elektrisch isolierenden oder auch aus einem elektrisch leitenden Material bestehen. Beispielsweise kann der Haftvermittler auch aus einem Metall bestehen, das bei der Schmelztemperatur des zu gießenden Metalls schmilzt. Dieses Metall des Haftvermittlers kann auf das Modell beispielsweise in Pulverform aufgebracht werden.

In Figur 5 ist schematisch lediglich die Schicht 4 dargestellt, aus der der Modellkörper durch Verdampfen oder Verflüssigen entfernt ist, so dass in den von der Schicht 4 umgebenen Raum 6 die Metallschmelze einfließt.

Figur 6 stellt den Gusskörper 7 dar, auf dem die Schicht 4 als Isolationsschicht fest haftet.

Die Beschichtung des Modellkörpers 3 mit der Schicht 4 erfolgt durch Aufbringen einer viskosen, flüssigen oder breiartigen Masse, beispielsweise in Form einer Schlichte mit einer Trägerflüssigkeit, die beispielsweise Wasser oder Alkohol sein kann, und einem oder mehreren Feuerfestbestandteilen sowie optional Zuschlagstoffen, die die Viskosität einstellen. Nach dem Metallguss sind in der Schicht 4 wenigstens noch die Feuerfestbestandteile und gegebenenfalls auch Bindemittel enthalten und bilden zusammen die Isolierschicht.

Die Beschichtung 4 kann in flüssiger Form auch mehrstufig erfolgen, wobei zwischendurch einzelne Schichten abbinden oder getrocknet oder gehärtet werden. Dadurch lassen sich insgesamt größere Schichtdicken in kurzer Zeit fertigstellen.

Der Modellkörper 3 kann beispielsweise durch Schäumen in einer Form oder durch Gießen oder Kernschießen hergestellt sein. Er kann je nach der Komplexität der Form auch mehrteilig zusammengesetzt sein, sowohl aus einzelnen geschäumten Teilkörpern als auch aus einzelnen gegossenen Teilkörpern.

Eine Möglichkeit der Herstellung besteht beispielsweise darin, dass aus einem durchgehenden, beispielsweise zylindrischen oder prismatischen Körper eine wendelförmige Ausnehmung ausgeschnitten wird, so dass ein wendelförmiger Körper stehenbleibt. Eine solche Variante ist beispielhaft in Figur 7 dargestellt. Dort ist ein Hohlzylinder 8 mit einer Hohlzylinderwand 10 gezeigt, die einen Hohlraum 9 umgibt. In dem Hohlraum 9 wird entlang der Zylinderachse 11 eine Welle 12 eines Schneidegeräts eingesteckt, wobei auf der Welle 12 ein Werkzeug 13 radial von dieser abstehend angeordnet ist. Das Werkzeug 13 kann als sägeartiges oder raspelartiges strangförmiges Werkzeug ausgestaltet sein, das beispielsweise durch einen oszillierenden Antrieb 14 in radialer Richtung bezüglich der Achse 11 vibrierend oder oszillierend antreibbar ist. Wird das Werkzeug 13 einerseits um die Welle 12 durch deren Rotation geschwenkt und andererseits entlang der Achse 11 durch einen weiteren Antrieb gleichmäßig und stetig vorgeschoben, so durchläuft das Werkzeug 13 eine wendelförmige Bahn, durch die in dem Hohlzylinder 8 eine wendelartige Ausnehmung 16 eingebracht werden kann. Wenn die wendelartige Ausnehmung 16 den Körper des Hohlzylinders 8 durchsetzt, dann bleibt zwischen den einzelnen Gängen der Ausnehmung 16 ein wendelförmiger Körper des Modells stehen, der dann mit einer Schicht 4 oder einer kombinierten Schicht 4, 5 beschichtet werden kann. Danach kann der so entstehende Modellkörper als verlorene Form für einen Metallverguss mit einer Metallschmelze dienen, so dass eine runde Metallspule mit einer Isolierstoffbeschichtung entsteht.

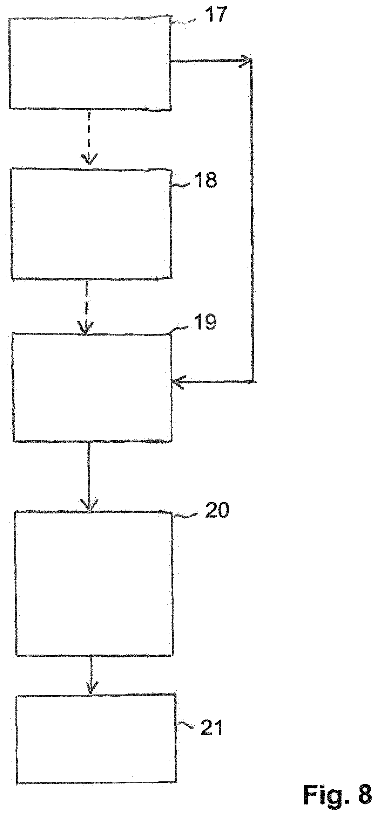

In Figur 8 ist schematisch anhand von Prozessschritten die Herstellung eines gewendelten, elektrisch leitenden, mit einer Isolierung versehenen Körpers dargestellt.

In einem ersten Verfahrensschritt 17 wird der Modellkörper aus einem Schaumstoff oder einem Wachs hergestellt. Danach wird optional in einem folgenden Schritt 18 eine Haftvermittlerschicht 5 auf das Modell aufgebracht. Im nächsten Verfahrensschritt 19 wird entweder unmittelbar auf das Modell oder auf die Haftvermittlerschicht eine Isolationsschicht 4, beispielsweise in Form einer Schlichte, aufgebracht und zum Abbinden gebracht.

Die so entstandene verlorene Form wird im folgenden Prozessschritt 20 in Formsand eingelegt und im Prozessschritt 21 mit einer Metallschmelze gefüllt. Damit ist der leitende Körper mit Isolierschicht fertiggestellt.

## Patentansprüche

1. Verfahren zur Herstellung eines gewendelten, elektrisch leitenden Körpers (2), bei dem zunächst ein gewendeltes Modell (3, 8) als verlorene Form aus einem unter Wärmeeinwirkung verflüssigbaren oder verdampfbaren Modellmaterial hergestellt und danach mit einer, vorzugsweise elektrisch, isolierenden Schicht (4, 5) bedeckt und in einen Formsand eingebettet wird und wobei danach in die verlorene Form unter Verdrängung des Modellmaterials ein metallisches Gussmaterial eingefüllt wird und sich mit der isolierenden Schicht verbindet und wobei der gegossene Körper (7) mit der auf diesem haftenden isolierenden Schicht (4, 5) dem Formsand entnommen wird, wobei das Gussmaterial und das Material der isolierenden Schicht derart aufeinander abgestimmt sind, dass die isolierende Schicht an dem Gussteil haftet und wobei die isolierende Schicht eine Zusammensetzung erhält, die sie zur späteren Verwendung als Isolierschicht des gewendelten, elektrisch leitenden Körpers qualifiziert.

2. Verfahren nach Anspruch 1, **dadurch gekennzeichnet, dass** die isolierende Schicht (4, 5) in Form einer Schlichte auf das gewendelte Modell aufgetragen wird.

3. Verfahren nach Anspruch 2, **dadurch gekennzeichnet, dass** die Schlichte eine Trägerflüssigkeit enthält, einen Feuerfestbestandteil, ein Bindemittel und optional weitere Zuschlagsstoffe und/oder
dass die isolierende Schicht (4, 5) durch Tauchen, Spritzen oder Sprühen auf das gewendelte Modell (3, 8) aufgetragen wird und/oder
dass die elektrisch isolierende Schicht (4, 5) in Form mehrerer nacheinander aufgebrachter Teilschichten aufgebracht wird und/oder
dass die isolierende Schicht (4, 5) durch Erwärmen und/oder einen Luftstrom teilschichtweise oder nach Aufbringen der letzten Schicht getrocknet wird.

4. Verfahren nach einem der Ansprüche 1 bis 3, **dadurch gekennzeichnet, dass** das gewendelte Modell (3) in einem Gießverfahren oder einem Schäumverfahren hergestellt wird, wobei das Modell insbesondere aus mehreren Teilen zusammengesetzt wird.

5. Verfahren nach Anspruch 4, **dadurch gekennzeichnet, dass** das Modell (3) als Rohling (8) hergestellt und danach durch Erzeugen einer wendelförmigen Ausnehmung (16) in die Form einer Wendel gebracht wird.

6. Verfahren nach Anspruch 5, **dadurch gekennzeichnet, dass** in dem Rohling (8) die wendelförmige Ausnehmung durch ein um eine den Rohling (8) durchsetzende erste Achse (11) rotierendes und gleichzeitig entlang der ersten Achse stetig vorgeschobenes Werkzeug (13) erzeugt wird.

7. Verfahren nach Anspruch 6, **dadurch gekennzeichnet, dass** das Werkzeug (13) strangförmig, insbesondere stabförmig, ausgebildet ist und während der Erzeugung der wendelförmigen Ausnehmung (16) um eine zweite Achse, insbesondere seine eigene Längsachse (13'), rotiert oder entlang der zweiten Achse (13') eine oszillierende Bewegung (15) ausführt, wobei das Werkzeug insbesondere eine säge-oder raspelartige Zahnung aufweist und/oder
dass das Werkzeug (13) auf eine Temperatur beheizt wird, bei der das Material des Modells (3, 8) zumindest erweicht, insbesondere schmilzt.

8. Verfahren nach einem der vorhergehenden Ansprüche, **dadurch gekennzeichnet, dass** das Material der isolierenden Schicht elektrisch isolierend ist und/oder
dass das Material der isolierenden Schicht zur Korrosionsverhinderung ausgebildet ist und/oder
dass das Material der isolierenden Schicht ein Kunststoffmaterial und/oder ein keramisches Material ist oder enthält und/oder dass das Material der isolierenden Schicht thermoplastische Polyurethane, thermoplastische Polycarbonate und/oder Polymethylmethacrylat enthält und/oder
Material zur Pulverbeschichtung und/oder Pulverlackierung und/oder Polyamid, Polyvinylchlorid, Epoxidsysteme mit Polyester als Bindemittel, Polyestersysteme mit TGIC als Härter und/oder Acrylat- und/oder Polyurethan-Systeme enthält.

9. Wendelförmiger Körper, hergestellt in einem Verfahren nach einem der vorhergehenden Ansprüche, enthaltend ein metallisches Gussmaterial sowie eine darauf haftende isolierende Schicht.

10. Körper nach Anspruch 9, **dadurch gekennzeichnet, dass** das metallische Gussmaterial Kupfer oder Aluminium enthält.

11. Körper nach einem der Ansprüche 9 oder 10, **dadurch gekennzeichnet, dass** die isolierende Schicht ein keramisches Material oder ein Kunststoffmaterial enthält.

12. Körper nach einem der Ansprüche 9 bis 11, **dadurch gekennzeichnet, dass** der Körper eine Längsachse, vorzugsweise die Achse der größten Ausdehnung, aufweist und die größte Ausdehnung senkrecht zu dieser Längsachse zwischen 0.02 m und 2 m beträgt.

13. Körper nach einem der Ansprüche 9 bis 12, **dadurch gekennzeichnet, dass** der Körper Windungen enthält und die größte Querschnittsausdehnung senkrecht zum Verlauf zumindest einer Windung zwischen 0,3 mm und 5 cm beträgt.

14. Körper nach einem der Ansprüche 9 bis 13, **dadurch gekennzeichnet, dass** das metallische Gussmaterial Kupfer, Aluminium, Silber oder Magnesium ist und mit einem isolierenden Kunststoffmaterial beschichtet ist.

15. Körper nach einem der Ansprüche 9 bis 13, **dadurch gekennzeichnet, dass** das metallische Gussmaterial Kupfer, Aluminium, Silber oder Magnesium ist und mit einem keramischen isolierenden Material beschichtet ist.

## Claims

1. A method for producing a helical, electrically conducting body (2), in which first a helical pattern (3, 8) is produced as a lost mold made of a pattern material that can be liquefied or evaporated under the action of heat, and thereafter is covered with a preferably electrically insulating layer (4, 5) and embedded in foundry sand, thereafter a metallic casting material being poured into the lost mold, displacing the pattern material, and bonding with the insulating layer, and the cast body (7) being removed, together with the insulating layer (4, 5) adhering thereto, from the foundry sand, the casting material and the material of the insulating layer being matched to one another such that the insulating material adheres to the cast part, and the insulating layer being provided with a composition that qualifies it for the later use as the insulating layer of the helical, electrically conducting body.

2. The method according to claim 1, **characterized in that** the insulating layer (4, 5) is applied to the helical pattern in the form of a foundry coating.

3. The method according to claim 2, **characterized in that** the foundry coating includes a carrier liquid, a refractory component, a binder, and optionally further additives and/or
that the insulating layer (4, 5) is applied to the helical pattern (3, 8) by way of dipping, squirting or spraying and/or
that the electrically insulating layer (4, 5) is applied in the form of a plurality of consecutively applied sub-layers and/or
that the insulating layer (4, 5) is dried by heating and/or by way of an air current, either sub-layer by sub-layer or after the last layer has been deposited.

4. The method according to any one of claims 1 to 3, **characterized in that** the helical pattern (3) is produced in a casting process or a foaming process, the pattern being in particular assembled from multiple parts.

5. The method according to claim 4, **characterized in that** the pattern (3) is produced as a blank (8), and thereafter is brought into the shape of a helix by creating a helical recess (16).

6. The method according to claim 5, **characterized in that** the helical recess is created in the blank (8) by way of a tool (13) rotating about a first axis (11), which extends through the blank (8), while being steadily advanced along the first axis.

7. The method according to claim 6, **characterized in that** the tool (13) has a strand-shaped, and in particular rod-shaped, design and rotates about a second axis, in particular its own longitudinal axis (13'), during the creation of the helical recess (16), or carries out an oscillating movement (15) along the second axis (13'), the tool including, in particular, saw-like or rasp-like teeth and/or
that the tool (13) is heated to a temperature at which the material of the pattern (3, 8) at least softens, and in particular melts.

8. The method according to any one of the preceding claims, **characterized in that** the material of the insulating layer is electrically insulating and/or
that the material of the insulating layer is designed for corrosion prevention and/or
that the material of the insulating layer is or comprises a plastic material and/or a ceramic material and/or
that the material of the insulating layer comprises thermoplastic polyurethanes, thermoplastic polycarbonates and/or polymethyl methacrylate and/or
comprises material for powder coating and/or powder lacquering and/or polyamide, polyvinyl chloride, epoxy systems including polyester as a binder, polyester systems including TGIC as a hardener and/or acrylate and/or polyurethane systems.

9. A helical body, produced in a method according to any one of the preceding claims, comprising a metallic casting material and an insulating layer adhering thereto.

10. The body according to claim 9, **characterized in that** the metallic casting material comprises copper or aluminum.

11. The body according to either claim 9 to 10, **characterized in that** the insulating layer comprises a ceramic material or a plastic material.

12. The body according to any one of claims 9 to 11, **characterized in that** the body has a longitudinal axis, preferably the axis of the largest extension, and the largest extension perpendicular to this longitudinal axis is between 0.02 m and 2 m.

13. The body according to any one of claims 9 to 12, **characterized in that** the body includes windings, and the largest cross-sectional extension perpendicular to the progression of at least one winding is between 0.3 mm and 5 cm.

14. The body according to any one of claims 9 to 13, **characterized in that** the metallic casting material is copper, aluminum, silver or magnesium and is coated with an insulating plastic material.

15. The body according to any one of claims 9 to 13, **characterized in that** the metallic casting material is copper, aluminum, silver or magnesium and is coated with a ceramic insulating material.

## Revendications

1. Procédé de fabrication d'un corps électriquement conducteur (2) spiralé, dans lequel un modèle spiralé (3, 8) est d'abord fabriqué sous la forme d'un moule perdu à partir d'un matériau de modèle pouvant être liquéfié ou vaporisé sous l'action de la chaleur est ensuite recouvert d'une couche de préférence électriquement isolante (4, 5) et intégré dans un sable de moulage, et dans lequel un matériau métallique de remplissage est ensuite introduit dans le moule perdu et se connecte à la couche isolante tandis que le matériau de modèle est retiré, et dans lequel le corps coulé (7) avec la couche isolante (4, 5) en adhérence sur celui-ci est retiré du sable de moulage, dans lequel le matériau de remplissage et le matériau de la couche isolante sont adaptés l'un à l'autre de telle sorte que la couche isolante adhère à la pièce moulée et dans lequel la couche isolante contient une composition qui la qualifie en tant que couche isolante du corps électriquement conducteur spiralé pour une utilisation ultérieure.

2. Procédé selon la revendication 1, **caractérisé en ce que** la couche isolante (4, 5) est appliquée sur le modèle spiralé sous la forme d'un apprêt.

3. Procédé selon la revendication 2, **caractérisé en ce que** l'apprêt contient un liquide porteur, un composant réfractaire, un liant et facultativement d'autres additifs et/ou
**en ce que** la couche isolante (4, 5) est appliquée sur le modèle spiralé (3, 8) par immersion, injection ou pulvérisation et/ou
**en ce que** la couche électriquement isolante (4, 5) est appliquée sous la forme de plusieurs sous-couches appliquées les unes après les autres et/ou
**en ce que** la couche isolante (4, 5) est séchée par chauffage et/ou un flux d'air dans certaines couches ou après l'application de la dernière couche.

4. Procédé selon l'une quelconque des revendications 1 à *3*,, **caractérisé en ce que** le modèle spiralé (3) est fabriqué dans un procédé de coulée ou un procédé de moussage, dans lequel le modèle est composé notamment de plusieurs parties.

5. Procédé selon la revendication 4, **caractérisé en ce que** le modèle (3) est fabriqué sous la forme d'une ébauche (8) et est ensuite amené en forme de spirale en créant un évidement en forme de spirale (16).

6. Procédé selon la revendication 5, **caractérisé en ce que** l'évidement en forme de spirale est réalisé dans l'ébauche (8) par un outil (13) tournant autour d'un premier axe (11) traversant l'ébauche (8) et en même temps avancé de manière continue le long du premier axe.

7. Procédé selon la revendication 6, **caractérisé en ce que** l'outil (13) se présente sous la forme d'un cordon, en particulier sous la forme d'une tige, et tourne autour d'un second axe, en particulier son propre axe longitudinal (13'), ou exécute un mouvement oscillant (15) le long du second axe (13') pendant la réalisation de l'évidement en forme de spirale(16), dans lequel l'outil présente notamment une denture en forme de scie ou de râpe et/ou
**en ce que** l'outil (13) est chauffé à une température à laquelle le matériau du modèle (3, 8) au moins se ramollit, en particulier fond.

8. Procédé selon l'une quelconque des revendications précédentes, **caractérisé en ce que** le matériau de la couche isolante est électriquement isolant et/ou
**en ce que** le matériau de la couche isolante est conçu pour empêcher la corrosion et/ou
**en ce que** le matériau de la couche isolante est ou contient une matière plastique et/ou un matériau de céramique et/ou
**en ce que** le matériau de la couche isolante contient du polyuréthane thermoplastique, du polycarbonate thermoplastique et/ou du polyméthacrylate de méthyle et/ou
contient un matériau pour application en revêtement par poudre et/ou peinture par poudre et/ou du polyamide, du polychlorure de vinyle, des systèmes époxy avec du polyester comme liant, des systèmes polyester avec TGIC comme durcisseur et/ou des systèmes acrylate et/ou polyuréthane.

9. Corps en forme de spirale fabriqué par un procédé selon l'une quelconque des revendications précédentes, contenant un matériau de remplissage métallique et une couche isolante mise en adhérence sur celui-ci.

10. Corps selon la revendication 9, **caractérisé en ce que** le matériau de remplissage métallique contient du cuivre ou de l'aluminium.

11. Corps selon l'une quelconque des revendications 9 ou 10, **caractérisé en ce que** la couche isolante contient un matériau de céramique ou une matière plastique.

12. Corps selon l'une quelconque des revendications 9 à 11, **caractérisée en ce que** le corps présente un axe longitudinal, de préférence l'axe de plus grande étendue, et la plus grande étendue perpendiculaire à cet axe longitudinal est comprise entre 0,02 m et 2 m.

13. Corps selon l'une quelconque des revendications 9 à 12, **caractérisé en ce que** le corps comporte des enroulements et la plus grande étendue de section transversale perpendiculairement au parcours d'au moins un enroulement est comprise entre 0,3 mm et 5 cm.

14. Corps selon l'une quelconque des revendications 9 à 13, **caractérisé en ce que** le matériau de remplissage métallique est du cuivre, de l'aluminium, de l'argent ou du magnésium et est revêtu d'une matière plastique isolante.

15. Corps selon l'une quelconque des revendications 9 à 13, **caractérisé en ce que** le matériau de remplissage métallique est du cuivre, de l'aluminium, de l'argent ou du magnésium et est revêtu d'un matériau de céramique isolant.
